# EUROPEAN PATENT SPECIFICATION

(11) **EP 3 154 336 B1**
(45) Date of publication and mention of the grant of the patent: **06.11.2019**
(21) Application number: 15807460.9
(22) Date of filing: 12.06.2015
(51) Int. Cl.: A01K 5/02, A01K 1/10

(54) **ROTARY LIVESTOCK FEEDER WITH GRAVITY FLOW FEED OPENINGS**
ROTIERENDE VIEHFÜTTERUNGSVORRICHTUNG MIT SCHWERKRAFTZUFLUSSÖFFNUNGEN
DISPOSITIF D'ALIMENTATION DE BÉTAIL ROTATIF DOTÉ D'OUVERTES D'ALIMENTATION À ÉCOULEMENT PAR GRAVITÉ

(30) Priority: 13.06.2014 US 201462012036 P
(43) Date of publication of application: 19.04.2017
(73) Proprietor: Osborne Industries, Inc., Osborne, KS 67473 (US)
(72) Inventor: EAKIN, George R., Osborne, KS 67473 (US)
(74) Representative: Uexküll & Stolberg
(86) International application number: PCT/US2015/035689
(87) International publication number: WO 2015/192097

(56) References cited:
- SU-A1- 623 783
- SU-A1- 860 736
- US-A- 3 450 431
- US-A- 4 353 329
- US-A- 4 462 338
- US-A- 4 462 338
- US-A- 4 729 344
- US-A- 5 069 164

## Description

### BACKGROUND OF THE INVENTION

### Field of the Invention

The present invention relates generally to livestock feeders. In particular, the present invention relates to a livestock feeder that can be used as a gravity flow feeder for small animals, and as a mechanical rotary feeder for larger animals.

### Description of the Related Art

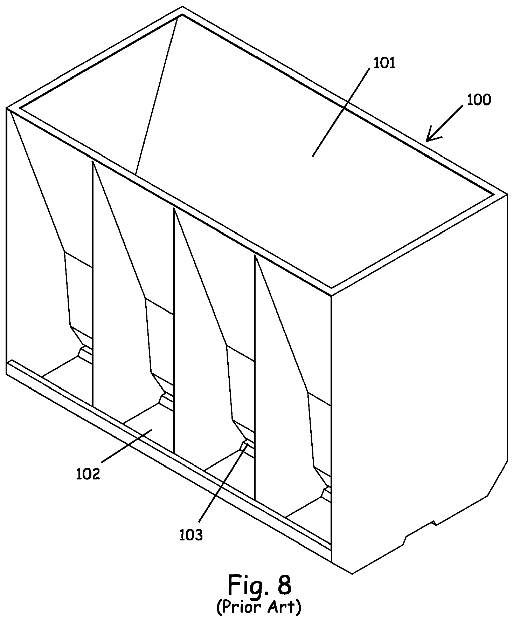

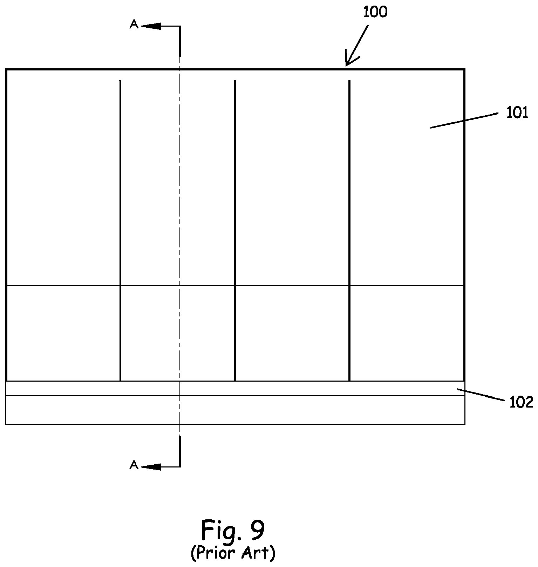

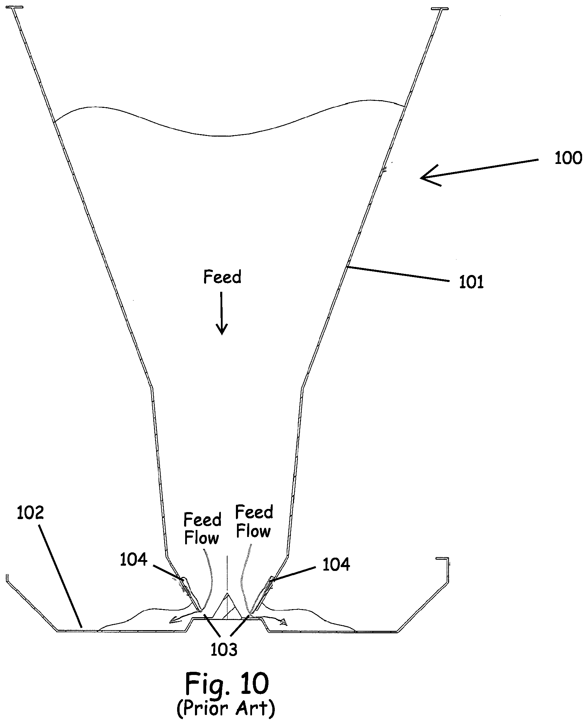

Figs. 8 to 10 show a typical gravity flow livestock feeder 100. This type of feeder 100 has a feed hopper 101 that is connected directly to the feed trough 102 through an opening 103 at the base of the feed hopper 101. The feed flow through the gravity flow feeder 100 is shown in the cross section view of Fig. 10. The feed is stored in the feed hopper 101 and flows out of the bottom into the feed trough 102. The feed flows through feed adjustment doors 104 that restrict feed flow into the feed trough 102. The gravity flow system works very well when animals are small and do not consume much feed, but as the animals grow, the feed adjustment doors 104 must be closed to prevent excess feed from flowing from the feed hopper 101 into the feed trough 102. Any excess feed will be wasted by larger animals as a result of the animal's natural rooting and sorting behavior. Therefore, when the feed adjustment doors 104 are closed and restrict feed flow, the animal's become hungrier, more aggressive, and do not grow as intended. The typical gravity flow feeder works very well for small animals, but has serious performance deficiencies as the animals grow larger and stronger.

Osborne Industries, Inc. recognized the importance of hog feeder design and developed a mechanical rotary feeder known in the industry as the Big Wheel® Feeder (U.S. Patent No. 6,199,511) to overcome the disadvantages associated with gravity flow livestock feeders. The Big Wheel® Feeder operated on a mechanical flow principal where the pig's natural rooting instinct is utilized to operate the feeder. Since the feeder is round in design and has a rotary feed wheel that transports the feed from the feed hopper to the feed trough, it constantly mixes all the feed in the trough, so that sorting and feed wasting is minimized. The Big Wheel® Feeder only requires a one-time adjustment to accommodate the type of feed quality and coarseness of feed grind, so that the feed flows properly through the feeder's mechanical delivery system.

US 5,069,164 A relates to an animal feeder having a rotatable feed plate. A spacer is carried by the feed plate to limit the amount of feed carried by the plate and further prevents accumulation of feed on the central portion feed plate. Limiting the amount of feed on the plate reduces the weight of feed to allow rotation of the plate by a smaller feeding animal. The spacer of this invention further reduces feed spoilage caused by static feed typically collected on the feed plate central portion. The feed plate is spaced from the feed trough by a central raised portion of the base to isolate feed carried on the plate from that in the trough. Isolating feed on the feed plate in this manner prevents the wicking of moisture from the trough into the hopper.

Similar prior art feeders are also known from US 4,462,338 A and US 4, 729, 344 A.

Mechanical rotary feeders have been manufactured in different sizes to fit the size of pig being raised. Nursery feeders and finishing feeders were designed to meet the needs of the respective pig size and weight. This rotary feed delivery became the feeder of choice for pork producers in the 1990s, owing to its substantial reduction of feed waste and improved feed efficiency. The use of gravity flow type feeders decreased as feed costs increased and producers strived to reduce the number of days it takes to raise a baby pig to a market sized pig.

The current swine production process (sow farms and wean-to-finish farms) has caused several problems for the design, operation, and upkeep of pig feeders. The primary problem is designing a pig feeder that is a one-size-fits-all solution. The pig feeder design must feed growing pigs from wean size (4.5 -7.0 kg) to finish size (127-130 kg) while meeting durability, ease of use, reduction of feed waste, and optimal feed delivery requirements. The two types of pig feeders each have their strengths and weaknesses in meeting these requirements.

The gravity flow feeder design is optimal in the starting of weaned pigs because the feed is always present in the feed trough and there is no action or movement required by the baby pig. However, as the baby pig grows, the gravity flow feeder design is quickly overwhelmed with the behavior of a growing pig and adjusting the feed flow becomes a significant challenge. The feed flow adjustment is critical to provide enough feed to enhance growth, but not so much that waste occurs. There is a very fine line in making this adjustment and normally the adjustments are not appropriately made, resulting in either under-nourished pigs or excessive feed waste. The amount of feed wasted by growing animals is very costly and creates waste management challenges. Many wean-to-finish farms have hired personnel to travel from farm to farm to make these timely adjustments, however, disease concerns and lack of skilled personnel are preventing best practice procedures from being fully executed.

The mechanical rotary feeder is optimal on the larger growing side of the finishing pig owing to the pig's natural behavior, superior feed flow control (auto regulating), and consistent feed mixing to reduce sorting and fouling of feed.

The major disadvantage of the mechanical rotary feeder design is that it requires the pig to be of sufficient weight and size to move or operate the feed wheel to mechanically move feed from the feed hopper to the feed trough. If the feed wheel is not moved, no feed will be delivered to the feed trough and the result will be under-nourished pigs. This is why the mechanical rotary feeder design was constructed to match the animal size and weight. It is possible to use a small mechanical rotary feeder designed for baby pigs weighing approximately 7 kg and feed the larger growing pigs weighing 50-100 kg. However, the feed trough size will eventually be too small to accommodate the head size of the growing pig (100 kg and above), and the feed hopper capacity will be less than required to feed the number of pigs that may be eating.

If a mechanical rotary feeder designed for finishing pigs (minimum pig starting weight 20 kg) is used to start the weaned pig at a weight of 7.0 kg, the weaned pig will have insufficient strength to move the feed wheel and dispense feed into the feed trough. Since the smaller weaned pigs are unable to operate the larger mechanical rotary feeder, they will be under-nourished to the point of death, if no other attention is provided.

There is a need in the industry for an improved livestock feeder that can be used in a wean-to-finish swine operation.

### SUMMARY OF THE INVENTION

The present invention corrects the above condition and allows the larger mechanical rotary feeder design to be modified into a gravity flow type feeder at the beginning of use and automatically adjusts to a mechanical rotary feeder to meet the needs of the larger finishing pig, by providing a feeder according to claim 1.

The present invention is designed such that when weaned pigs, weighing approximately 7.0 kg, are placed into a pen with the larger mechanical rotary feeder, the opening will allow feed to gravity flow out of the feed hopper and directly into the feed trough. The opening will be sized so that enough feed is allowed to gravity flow into the feed trough to nourish the weaned pigs, but not enough to allow for wasting or fouling. As the weaned pigs grow, the supply of feed from the opening will be overcome and the pigs will begin rooting the feed wheel to gain access to the feed that is around the feed wheel. The movement of the feed wheel will then cause feed to flow from the feed hopper to the feed trough resulting in a fully mechanical flow feeder.

When the pigs reach market size and are removed from the feed pen, the feed pens are cleaned, and the feeders are emptied and prepared for another pen of weaned pigs.

According to the invention, as defined in claim 1, a feeder for dispensing feed to livestock is provided, comprising: a hopper; a mechanical rotary feed flow system having a feed discharge hole and an animal-activated sweep member for sweeping feed from the hopper into the feed discharge hole for discharge from the hopper; a gravity flow feed system having at least one gravity flow feed opening for allowing feed to flow by gravity from the hopper, the gravity flow feed opening being separate from the feed discharge hole; and a closure system associated with the gravity flow feed system, the closure system having a first condition in which the gravity flow feed opening is open to allow gravity feed flow through the gravity flow feed opening, and a second condition in which the gravity flow feed opening is closed.

According to the present invention, an activator mechanism is arranged to move with the sweep member to cause the closure system associated with the gravity flow feed system to change from its first condition into its second condition.

Numerous other objects of the present invention will be apparent to those skilled in this art from the following description wherein there is shown and described an embodiment of the present invention, simply by way of illustration of one of the modes best suited to carry out the invention. As will be realized, the invention is capable of other different embodiments, and its several details are capable of modification in various obvious aspects without departing from the invention. Accordingly, the drawings and description should be regarded as illustrative in nature and not restrictive.

### BRIEF DESCRIPTION OF THE DRAWINGS

The present invention will become more clearly appreciated as the disclosure of the invention is made with reference to the accompanying drawings. In the drawings:
Fig. 1 is a perspective view of a rotary livestock feeder according to the present invention.
Fig. 2 is an exploded perspective view of the rotary livestock feeder shown in Fig. 1.
Fig. 3a is a perspective bottom view of a feed hopper of the rotary livestock feeder.
Fig. 3b is a partially exploded perspective view of the rotary livestock feeder, showing the feed hopper separated from the trough cage.
Fig. 4 is an exploded perspective view of the lower portion of the hopper, a closure system associated with the gravity flow feed openings, and the upper portion of the trough cage.
Fig. 5 is a cross section elevation view of the rotary livestock feeder showing the normal mechanical feed flow of the feeder.
Fig. 6 is a cross section elevation view of the rotary livestock feeder showing the gravity feed flow when the gravity flow feed openings are open.
Fig. 7 is another cross section elevation view of the rotary livestock feeder showing an alternate embodiment in which flip doors are used instead of sliding doors to close the gravity flow feed openings.
Fig. 8 illustrates a conventional gravity flow feeder.
Fig. 9 is an elevation view of the gravity flow feeder shown in Fig. 8.
Fig. 10 is a cross section view taken along line A-A in Fig. 9 to show the feed flow through the feeder.

### DETAILED DESCRIPTION OF THE INVENTION

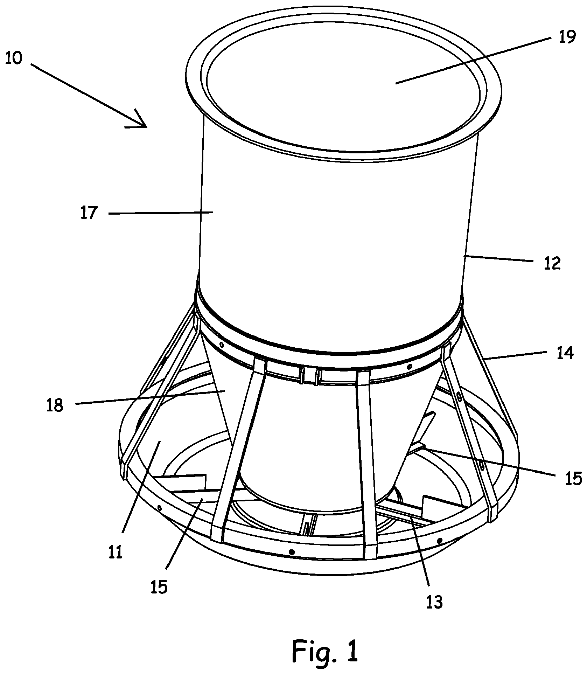

A rotary livestock feeder 10 for dispensing feed to livestock according to the present invention will now be described in detail with reference to Figs. 1 to 7 of the drawings.

Conventional parts of the rotary livestock feeder 10 are illustrated in Fig. 1. The feeder 10 includes a trough 11, a hopper 12 mounted above the trough 11, a feed wheel 13 disposed below the hopper 12 in the trough 11, and a cage 14 connecting the hopper 12 to the trough 11. The feed wheel 13 has a plurality of spokes 15 extending radially outwardly from a hub 16, and the hub 16 rotates around a central vertical axis when animals push against the spokes 15. This type of rotary feeder (without the gravity flow feature of the present invention described below) was developed in the 1980s as means to control the feed flow from the feed hopper 12 into the trough 11. The rotary design with the feed wheel 13 in the trough 11 allowed the feeder 10 to use the natural rooting and sorting behavior of swine to operate and clean the feed trough 11.

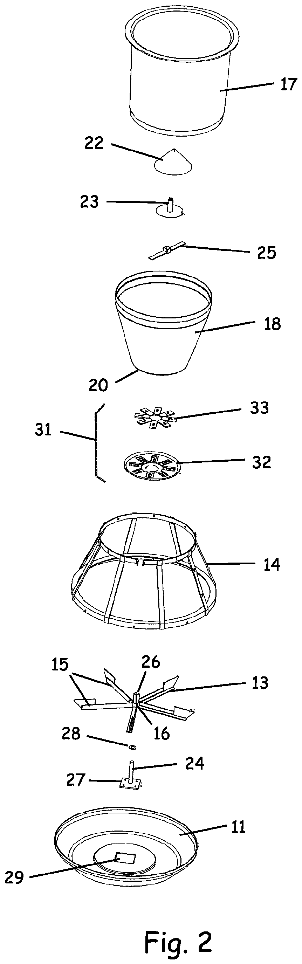

Fig. 2 shows the components that are assembled together to comprise the rotary feeder 10 of the present invention. The hopper 12 includes a top portion 17 attached to a bottom portion 18. The top portion 17 of the hopper 12 has a generally cylindrical sidewall, and the bottom portion 18 of the hopper has a frustoconical sidewall that tapers downwardly and inwardly. The hopper 12 provides an area 19 where the feed is placed in storage prior to being dispensed by gravity flow or mechanical movement into the trough 11.

The bottom 20 of the hopper 12 has a central feed discharge hole 21 where the feed exits from the feed hopper 12 into the trough 11. Inside of the bottom portion 18 of the hopper 12 are a feed cone 22 and feed cone support 23 that is suspended above the central feed discharge hole 21 located in the hopper bottom 20. The feed cone support 23 is concentric with a central axle 24 to ensure central alignment above the central feed discharge hole 21. The feed cone 22 functions as a deflector vertically spaced above the bottom 20 of the hopper 12 that covers the central feed discharge hole 21 and restricts or prevents feed from flowing to the central feed discharge hole 21 due solely to gravity.

Beneath the feed cone 22 is a feed sweep member 25. The feed sweep member 25 is operably coupled with the center tube 26 of the feed wheel 13 for rotation together with the feed wheel 13. The feed wheel 13 is located concentric to the axle 24 and rests on the plate 27 connected to the axle. A feed wheel washer 28 is inserted between the feed wheel 13 and the axle plate 27. The feed wheel washer 28 provides the clearance necessary to prevent the feed wheel 13 from dragging on the trough 11. The axle 24 is attached to the center square location 29 of the trough 11. The feed hopper bottom 20 is connected to the trough 11 through the use of the trough cage 14. The trough cage 14 provides circumferentially arranged areas where the animals can access the feed in the trough 11.

The mechanical operation of the rotary feeder 10 is achieved by the animal's natural instinct of rooting and sorting of feed stuff. The animal enters the feeding area created by the trough cage 14 and eats the feed located in the trough 11. As the feed is consumed, the animal roots the feed wheel 13 one way or another causing rotation of the feed wheel 13. The animal-induced rotation of the feed wheel 13 in the trough 11 causes the feed sweep member 25 to rotate and sweep feed from inside of the bottom portion 18 of the hopper 12 to fall through the central feed discharge hole 21 located in the feed hopper bottom 20. The feed falls into the center of the trough 11 and is swept to the outer perimeter of the trough 11 by the feed wheel 13. Fresh feed is available for the process to begin over again.

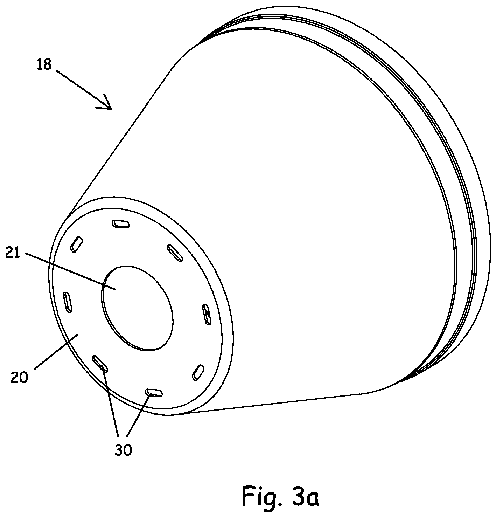

The present invention differs from a conventional rotary feeder by having at least one gravity flow feed opening 30 through the bottom 20 of the hopper 12 in addition to the central feed discharge hole 21. The gravity flow feed openings 30 are used to allow feed to flow directly into the trough 11 by gravity. For example, as shown in Fig. 3a, a plurality of spaced-apart gravity flow feed openings 30 can be arranged in a circular pattern in the bottom 20 of the hopper 12 around the central feed discharge hole 21. The gravity flow feed openings 30 are arranged near the outer perimeter of the hopper bottom 20 between the central feed discharge hole 21 and the sidewall of the hopper 12. The gravity flow feed openings 30 are positioned so that the deflector cone 22 or other structures within the feed hopper 12 do not obstruct or restrict the gravity flow of feed through the openings 30. The feed stored inside of the feed hopper 12 flows freely into the trough 11 through the gravity flow feed openings 30.

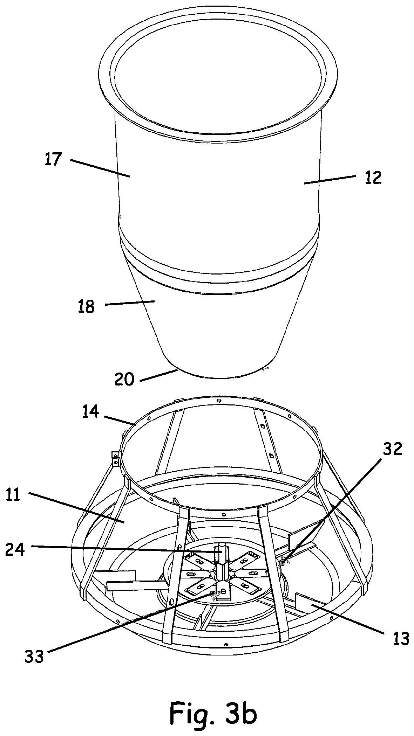

A closure system 31 is associated with the gravity flow feed openings 30 to allow the openings 30 to be closed when gravity feed flow is not desired (e.g., when the animals become large enough to operate the feed wheel). As shown in Fig. 2, the closure system 31 includes a gravity flow modification plate 32 attached on the underneath side of the feed hopper bottom 18. Inside of the gravity flow modification plate 32 are a plurality of slide doors 33 that are movable along respective radial lines extending from the central vertical axis of the feeder 10. The slide doors 33 can be moved radially outwardly from a first position in which the gravity flow feed openings 30 are open, to a second position in which the gravity flow feed openings 30 are closed to block gravity flow of feed from the feed hopper 12 into the trough 11. Fig. 3b shows the gravity flow modification plate 32 and slide doors 33 assembled and concentrically located around the axle 24.

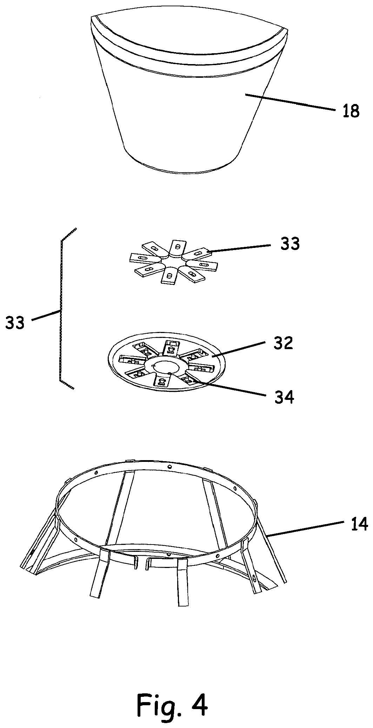

Fig. 4 shows the exploded view of the slide doors 33 and the gravity flow modification plate 32. The slide doors 33 are individual pieces that slide in the recessed areas 34 located on the gravity flow modification plate 32. The slide doors 33 are opened by pushing them from the outside of the gravity flow modification plate 32 inward towards the centerline 24 of the rotary feed mechanism. When the slide doors 33 are located in the inward most position, the gravity flow feed openings 30 are unobstructed allowing feed to flow from the feed hopper 12 into the trough. When the slide doors 33 are located in the outer most position, the slide doors 33 will obstruct feed flowing from the feed hopper bottom 20 into the trough 11.

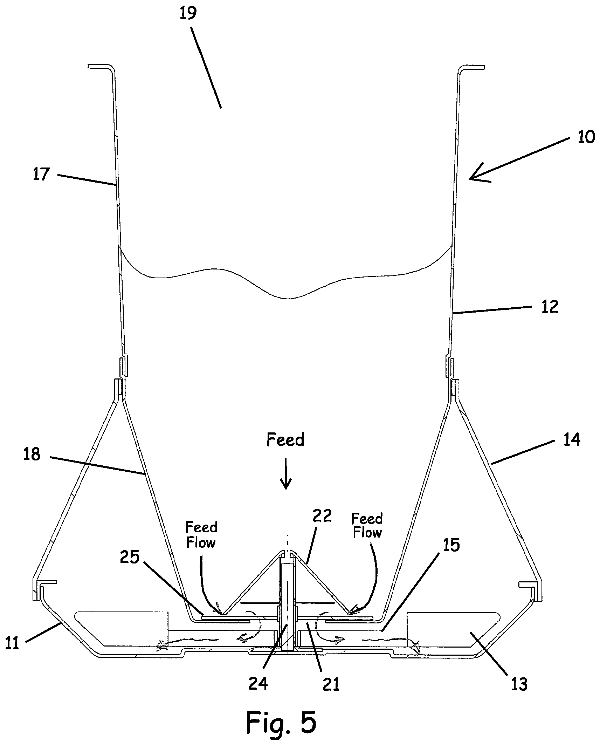

Fig. 5 shows the normal mechanical feed flow of the rotary feeder 10. The feed is mechanically swept beneath the feed cone 22 by the sweep member 25 and falls through the central discharge hole 21 located on the feed hopper bottom 20. The feed is then swept to the outer perimeter of the trough 11 by the feed wheel 13. This process works very well for larger animals that are stronger and more capable of moving the feed wheel 13 causing the mechanical operation to occur. However, present conditions exist in the swine industry where much smaller animals are being placed on rotary feeders and are not yet big or strong enough to move the feed wheel 13.

The present invention solves this problem by creating a gravity flow feeder for the first several weeks of animal growth allowing the animals to gain enough size and strength to operate the rotary feeder properly. This is achieved by installing and attaching the gravity flow modification plate 32 and slide doors 33 under the feed hopper bottom 20 with the gravity flow feed openings 30 formed therein.

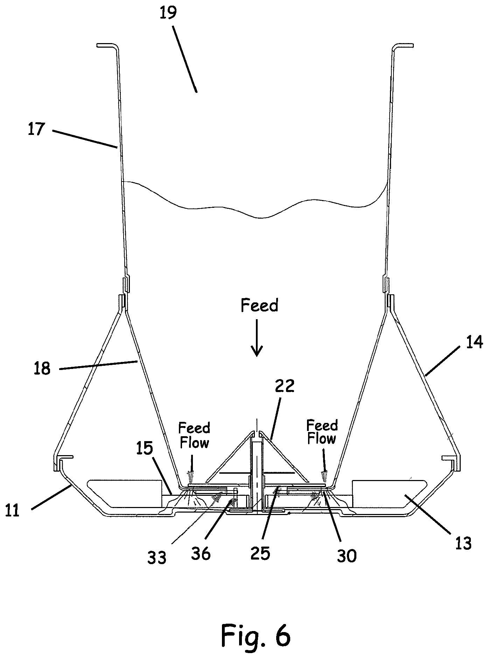

Fig. 6 shows the feed flow from the feed hopper bottom 20 into the trough 11 when the gravity flow feed openings 30 are unobstructed by the slide doors 33. The feed is able to flow freely from the feed hopper 12 into the trough 11 where the animals can consume the feed. The gravity flow feed openings 30 are sized such that a desired amount of feed exiting the openings occurs, but not so large to allow the animals to consume the feed flow directly from the openings 30. The feed flow from the gravity flow feed openings 30 is limited so that as the animals consume the feed, the feed is consumed faster than it is supplied. This limiting feed will cause the animal to naturally root and sort around the feed wheel 13. If the animals are big and strong enough to move the feed wheel 13 to access feed located around and beneath the feed wheel 13, then the rotary feed action is initiated.

The present invention also has an activator mechanism 35 associated with the feed wheel 13 that is arranged to cause the slide doors 33 to move from their open positions to their closed positions automatically upon rotation of the feed wheel 13. The activator mechanism 35 has an activator pin 36 attached to and extending upwardly from one of the spokes 15 of the feed wheel 13. The activator pin 36 has a path of movement when the feed wheel 13 rotates that causes the pin 36 to contact with the slide doors 33. As the feed wheel 13 is rotated, the activator pin 36 rotates and contacts the slide doors 33 forcing the doors 33 to be moved in the radially outward direction. Eventually and over time, the feed wheel 13 will make a complete revolution causing the activator pin 36 to contact all of the slide doors 33 one-by-one and forcing them to move to the maximum outward position. When the slide doors 33 are in the maximum outward position, the slide doors 33 obstruct feed flow from the gravity flow feed openings 30 in the hopper bottom 20, thereby automatically converting the gravity feeder into a mechanical rotary feeder.

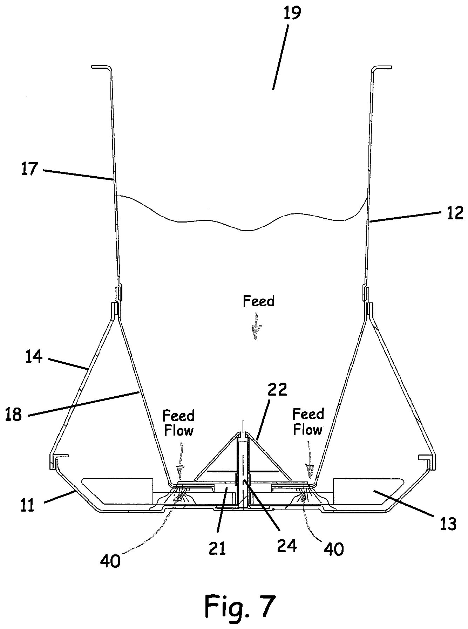

Fig. 7 shows a similar construction where flip doors 40 are hinged to the underside of the feed hopper bottom 20 and activated by contact with the feed wheel 13 causing the flip doors 40 to close and obstruct feed flow through the gravity flow feed openings 30. There are a variety of other means of achieving obstruction of gravity feed flow in a rotary type feeder, such as a rotating plate, manually adjusted feed flow orifices, and interchangeable plates. In each of these alternative arrangements, a closure system can be provided with a first condition in which the gravity flow feed openings 30 are open to allow gravity feed flow through the openings 30 into the trough 11, and a second condition in which the gravity flow feed openings 30 are closed.

The present invention provides a rotary or mechanical flow feeder 10 that can be converted into a gravity type feeder for application where small animals need to be fed. The feeder 10 can then be converted from gravity flow back to mechanical flow by a closure system 31 that blocks the gravity flow openings 30. The closure system 31 allows the conversion to be automatic based on the natural feeding behavior of the animals.

While the invention has been specifically described in connection with specific embodiments thereof, it is to be understood that this is by way of illustration and not of limitation, and the scope of the appended claims should be construed as broadly as the prior art will permit.

## Claims

1. A feeder (10) for dispensing feed to livestock, comprising:
- a hopper (12) comprising a sidewall and a bottom (20);
- a mechanical rotary feed flow system having a central feed discharge hole (21) that extends through the bottom (20) of said hopper (12) and an animal-activated sweep member (25) for sweeping feed from said hopper (12) into said central feed discharge hole (21) for discharge from said hopper (12);
- said mechanical rotary feed flow system comprises a deflector (22) mounted in said hopper (12) above said hopper bottom (20) and vertically spaced from said hopper bottom (20), said deflector (22) covering said central feed discharge hole (21) to restrict gravity flow of feed from said hopper (12) through said central feed discharge hole (21), said sweep member (25) being mounted for rotation about a vertical axis, and said sweep member (25) being located between said deflector (22) and said hopper bottom (20) for sweeping feed to said central feed discharge hole (21) to discharge therethrough;
- said sweep member (25) is operably coupled with a feed wheel (13) disposed in a trough (11) below said hopper (12) so that animal-induced rotation of said feed wheel (13) in said trough (11) causes rotation of said sweep member (25) in said hopper (12) for sweeping feed to said central feed discharge hole (21) for discharge into said trough (11);
**characterized by**:
- said feeder having a gravity flow feed system in addition to said mechanical rotary feed flow system, said gravity flow feed system having at least one gravity flow feed opening (30) that extends through said hopper bottom (20) for allowing feed to flow by gravity from said hopper (12), said gravity flow feed opening (30) being separate from said central feed discharge hole (21), and said gravity flow feed opening (30) being located between said central feed discharge hole (21) and the sidewall of said hopper (12);
- a closure system (31) associated with said gravity flow feed system, said closure system (31) having a first condition in which said gravity flow feed opening (30) is open to allow gravity feed flow through said gravity flow feed opening (30), and a second condition in which said gravity flow feed opening (30) is closed; and
- an activator mechanism (35) associated with said feed wheel that is arranged to cause said closure system (31) to change from its first condition into its second condition upon rotation of said feed wheel.

2. The feeder according to claim 1, wherein said closure system (31) comprises a sliding door (33).

3. The feeder according to claim 1, wherein said closure system comprises a flip door (40) hinged to an underside of a bottom of the hopper (12).

4. The feeder according to claim 1, wherein said at least one gravity flow feed opening (30) comprises a plurality of openings (30) in the bottom (20) of said hopper (12) that are spaced in a circular pattern surrounding an outer periphery of said deflector (22).

5. The feeder according to claim 1, wherein said closure system (31) comprises a plurality of slide doors (33), each slide door (33) having a first position in which a respective gravity flow feed opening (30) is open and a second position in which the respective gravity flow feed opening (30) is closed by the slide door (33).

6. The feeder according to claim 5, wherein said closure system (31) further comprises a mounting structure (32) having a plurality of recessed areas (34) for receiving the slide doors (33), said slide doors (33) being slidable within said recessed areas (34) along respective radial lines extending from said vertical axis.

7. The feeder according to claim 5, wherein said activator mechanism (35) is arranged to cause said slide doors (33) to move from their first positions to their second positions upon rotation of said feed wheel (13).

8. The feeder according to claim 7, wherein said activator mechanism (35) comprises an activator pin (36) attached to said feed wheel (13), and said activator pin (36) is arranged to contact said slide doors (33) and force the slide doors (33) radially outwardly from their first positions to their second positions upon rotation of said feed wheel (13).

9. The feeder according to claim 8, wherein said feed wheel (13) comprises a hub (16) mounted to an axle (24) for rotation about said vertical axis, and a plurality of spokes (15) extending radially outwardly from said hub (16), and said activator pin (36) extends upwardly from one of said spokes (15).

## Patentansprüche

1. Zuführvorrichtung (10) zur Abgabe von Futtermittel an Vieh, umfassend:
- einen Behälter (12) mit einer Seitenwand und einem Boden (20);
- ein mechanisches Rotations-Futtermittel-Fließsystem mit einer zentralen Futtermittel-Ausgabeöffnung (21), die sich durch den Boden (20) des Behälters (12) erstreckt, und einem durch ein Tier aktivierbares Kehrbauteil (25) zum Auskehren von Futtermittel aus dem Behälter (12) in die zentrale Futtermittel-Ausgabeöffnung (21) zwecks Ausgabe aus dem Behälter (12);
- wobei das mechanische Rotations-Futtermittel-Fließsystem einen Deflektor (22) aufweist, der in dem Behälter (12) über dem Behälterboden (20) montiert und in vertikaler Richtung von dem Behälterboden (20) beabstandet ist, wobei der Deflektor (22) die zentrale Futtermittel-Ausgabeöffnung (21) überdeckt, um ein schwerkraftbedingtes Fließen von Futtermittel aus dem Behälter (12) durch die zentrale Futtermittel-Ausgabeöffnung (21) zu beschränken, wobei das Kehrbauteil (25) drehbar um eine vertikale Achse montiert ist, und wobei das Kehrbauteil (25) zwischen dem Deflektor (22) und dem Behälterboden (20) angeordnet ist, um Futtermittel in Richtung auf die zentrale Futtermittel-Ausgabeöffnung (21) zu kehren, um es durch diese auszugeben;
- wobei das Kehrbauteil (25) funktional mit einem Zuführrad (13) gekoppelt ist, das in einer Wanne (11) unterhalb des Behälters (12) angeordnet ist, so dass eine durch ein Tier induzierte Drehung des Zuführrades (13) in der Wanne (11) eine Rotation des Kehrbauteils (25) in dem Behälter (12) bewirkt, um Futtermittel in Richtung auf die zentrale Futtermittel-Ausgabeöffnung (21) zu kehren, um dieses in die Wanne (11) auszugeben;
**dadurch gekennzeichnet, dass**:
- die Zuführvorrichtung zusätzlich zu dem mechanischen Rotations-Futtermittel-Fließsystem ein Schwerkraftfluss-Zuführsystem aufweist, wobei das Schwerkraftfluss-Zuführsystem mindestens eine Schwerkraftfluss-Zuführöffnung (30) aufweist, die sich durch den Behälterboden (20) erstreckt, um zu ermöglichen, dass Futtermittel durch Schwerkraft aus dem Behälter (12) fließt, wobei die Schwerkraftfluss-Zufuhröffnung (30) von der zentralen Futtermittel-Ausgabeöffnung (21) getrennt ist, und wobei die Schwerkraftfluss-Zuführöffnung (30) zwischen der zentralen Futtermittel-Ausgabeöffnung (21) und der Seitenwand des Behälters (12) angeordnet ist;
- ein mit dem Schwerkraftfluss-Zuführsystem in Beziehung stehendes Verschlusssystem (31) vorgesehen ist, wobei das Verschlusssystem (31) einen ersten Zustand, in dem die Schwerkraftfluss-Zuführöffnung (30) geöffnet ist, um ein schwerkraftbedingtes Fließen von Futtermittel durch die Schwerkraftfluss-Zuführöffnung (30) zu ermöglichen, und einen zweiten Zustand hat, in dem die Schwerkraftfluss-Zuführöffnung (30) geschlossen ist; und
- ein mit dem Zuführrad in Beziehung stehender Aktivierungsmechanismus (35) vorgesehen ist, der ausgestaltet ist, um zu bewirken, dass das Verschlusssystem (31) bei Drehung des Zuführrades aus seinem ersten Zustand in seinen zweiten Zustand wechselt.

2. Zuführvorrichtung nach Anspruch 1, wobei das Verschlusssystem (31) eine verschiebbare Klappe (33) aufweist.

3. Zuführvorrichtung nach Anspruch 1, wobei das Verschlusssystem eine kippbare Klappe (40) aufweist, die an einer Unterseite eines Bodens des Behälters (12) angelenkt ist.

4. Zuführvorrichtung nach Anspruch 1, wobei die mindestens eine Schwerkraftfluss-Zuführöffnung (30) eine Mehrzahl von Öffnungen (30) im Boden (20) des Behälters (12) umfasst, die in einem kreisförmigen Muster beabstandet sind, das einen äußeren Umfang des Deflektors (22) umgibt.

5. Zuführvorrichtung nach Anspruch 1, wobei das Verschlusssystem (31) eine Mehrzahl von verschiebbaren Klappen (33) aufweist, wobei jede verschiebbare Klappe (33) eine erste Position, in der eine zugehörige Schwerkraftfluss-Zuführöffnung (30) geöffnet ist, und eine zweite Position aufweist, in der die zugehörige Schwerkraftfluss-Zuführöffnung (30) durch die verschiebbare Klappe (33) geschlossen ist.

6. Zuführvorrichtung nach Anspruch 5, wobei das Verschlusssystem (31) außerdem eine Montagestruktur (32) mit einer Mehrzahl von vertieften Bereichen (34) zur Aufnahme der verschiebbaren Klappen (33) aufweist, wobei die verschiebbaren Klappen (33) innerhalb der vertieften Bereiche (34) entlang zugehöriger radialer Linien, die sich von der vertikalen Achse erstrecken, verschiebbar sind.

7. Zuführvorrichtung nach Anspruch 5, wobei der Aktivierungsmechanismus (35) ausgestaltet ist, um zu bewirken, dass die verschiebbaren Klappen (33) bei Drehung des Zuführrades (13) aus ihren ersten Positionen in ihre zweiten Positionen bewegt werden.

8. Zuführvorrichtung nach Anspruch 7, wobei der Aktivierungsmechanismus (35) einen Aktivierungsstift (36) aufweist, der an dem Zuführrad (13) angebracht ist, und wobei der Aktivierungsstift (36) angeordnet ist, um mit den verschiebbaren Klappen (33) in Kontakt zu stehen und um die verschiebbaren Klappen (33) bei Drehung des Zuführrades (13) aus ihren ersten Positionen radial nach außen in ihre zweiten Positionen zu bewegen.

9. Zuführvorrichtung nach Anspruch 8, wobei das Zuführrad (13) eine Nabe (16), die zur Drehung um die vertikale Achse an einer Achse (24) angebracht ist, und mehrere Speichen (15) aufweist, die sich von der Nabe (16) radial nach außen erstrecken, und wobei sich der Aktivierungsstift (36) von einer der Speichen (15) nach oben erstreckt.

## Revendications

1. Dispositif d'alimentation (10) destiné à distribuer des aliments à du bétail, comprenant:
- une trémie (12) présentant une paroi latérale et un fond (20);
- un système mécanique rotatif d'écoulement des aliments doté d'un trou central de distribution d'aliments (21), qui s'étend à travers le fond (20) de ladite trémie (12), et un élément de balayage (25) activé par un animal pour pousser les aliments de ladite trémie (12) dans ledit trou central de distribution d'aliments (21), en vue de la distribution à partir de ladite trémie (12);
- ledit système mécanique rotatif d'écoulement des aliments comprend un déflecteur (22) monté dans ladite trémie (12), au-dessus dudit fond de trémie (20), et espacé verticalement dudit fond de trémie (20), ledit déflecteur (22) recouvrant ledit trou central de distribution d'aliments (21) pour limiter l'écoulement par gravité des aliments de ladite trémie (12), à travers ledit trou central de distribution d'aliments (21), ledit élément de balayage (25) étant monté en vue d'une rotation autour d'un axe vertical, et ledit élément de balayage (25) étant placé entre ledit déflecteur (22) et ledit fond de trémie (20), aux fins de pousser les aliments vers ledit trou central de distribution d'aliments (21) pour les délivrer à travers celui-ci;
- ledit élément de balayage (25) est couplé du point de vue fonctionnel à une roue d'alimentation (13) disposée dans une auge (11) sous ladite trémie (12), de sorte qu'une rotation de ladite roue d'alimentation (13) dans ladite auge (13), provoquée par un animal, déclenche la rotation dudit élément de balayage (25) dans ladite trémie (12), pour pousser les aliments vers ledit trou central de distribution d'aliments (21) afin de les déverser dans ladite auge (11);
**caractérisé en ce que**:
- ledit dispositif d'alimentation présente un système d'alimentation à écoulement par gravité, en plus dudit système mécanique rotatif d'écoulement des aliments, ledit système d'alimentation à écoulement par gravité comportant au moins une ouverture d'alimentation à écoulement par gravité (30) qui s'étend à travers ledit fond de trémie (20) pour permettre aux aliments de s'écouler par gravité depuis ladite trémie (12), ladite ouverture d'alimentation à écoulement par gravité (30) étant séparée dudit trou central de distribution d'aliments (21), et ladite ouverture d'alimentation à écoulement par gravité (30) étant située entre ledit trou central de distribution d'aliments (21) et la paroi latérale de ladite trémie (12);
- un système de fermeture (31) associé audit système d'alimentation à écoulement par gravité, ledit système de fermeture (30) ayant un premier état dans lequel ladite ouverture d'alimentation à écoulement par gravité (30) est ouverte pour permettre l'écoulement des aliments par gravité à travers ladite ouverture d'alimentation à écoulement par gravité (30), et un deuxième état dans lequel ladite ouverture d'alimentation à écoulement par gravité (30) est fermée; et
- un mécanisme d'actionnement (35) qui est associé à ladite roue d'alimentation et est disposé de manière à ce que ledit système de fermeture (31) passe de son premier état à son deuxième état, suite à la rotation de ladite roue d'alimentation.

2. Dispositif d'alimentation selon la revendication 1, dans lequel ledit système de fermeture (31) comprend un volet coulissant (33).

3. Dispositif d'alimentation selon la revendication 1, dans lequel ledit système de fermeture comprend un volet battant (40) articulé sur une face inférieure d'un fond de la trémie (12).

4. Dispositif d'alimentation selon la revendication 1, dans lequel ladite ouverture d'alimentation à écoulement par gravité (30), au nombre d'au moins une, comprend une pluralité d'ouvertures (30) dans le fond (20) de ladite trémie (12), qui sont espacées suivant une configuration circulaire en entourant la périphérie extérieure dudit déflecteur (22).

5. Dispositif d'alimentation selon la revendication 1, dans lequel ledit système de fermeture (31) comprend une pluralité de volets coulissants (33), chaque volet coulissant (33) ayant une première position, dans laquelle une ouverture d'alimentation à écoulement par gravité (30) respective est ouverte, et une deuxième position dans laquelle l'ouverture d'alimentation à écoulement par gravité (30) respective est fermée par le volet coulissant (33).

6. Dispositif d'alimentation selon la revendication 5, dans lequel ledit système de fermeture (31) comprend en outre une structure de montage (32) dotée d'une pluralité de zones en retrait (34) destinées à recevoir les volets coulissants (33), lesdits volets coulissants (33) pouvant coulisser dans lesdites zones en retrait (34), le long de lignes radiales respectives s'étendant à partir dudit axe vertical.

7. Dispositif d'alimentation selon la revendication 5, dans lequel ledit mécanisme d'actionnement (35) est disposé de manière à faire passer lesdits volets coulissants (33) de leurs premières positions à leurs deuxièmes positions, suite à la rotation de ladite roue d'alimentation (13).

8. Dispositif d'alimentation selon la revendication 7, dans lequel ledit mécanisme d'actionnement (35) comprend une broche d'actionnement (36) fixée à ladite roue d'alimentation (13), et ladite broche d'actionnement (36) est disposée de manière à être en contact avec lesdits volets coulissants (33) et à pousser les volets coulissants (33) radialement vers l'extérieur, de leurs premières positions à leurs deuxièmes positions, suite à la rotation de ladite roue d'alimentation (13).

9. Dispositif d'alimentation selon la revendication 8, dans lequel ladite roue d'alimentation (13) comprend un moyeu (16), qui est monté sur un essieu (24) en vue de la rotation autour dudit axe vertical, et une pluralité de rayons (15) qui s'étendent radialement vers l'extérieur à partir dudit moyeu (16), et ladite broche d'actionnement (36) s'étend vers le haut à partir de l'un desdits rayons (15).
